# EUROPEAN PATENT SPECIFICATION

(11) **EP 1 050 548 B1**
(45) Date of publication and mention of the grant of the patent: **14.01.2004**
(21) Application number: 99108977.2
(22) Date of filing: 06.05.1999
(51) Int. Cl.: C08F 255/02, C08L 51/06, C08L 23/02

(54) **A thermoplastic composition and a process for making the same**
Thermoplastische Zusammensetzung und Verfahren zur Herstellung derselben
Composition thermoplastique et procédé pour la fabriquer

(43) Date of publication of application: 08.11.2000
(73) Proprietor: Fritz, Hans-Gerhard, Prof. Dr., 73066 Uhingen (DE)
(72) Inventor: Kirchner, Claus-Peter, 6122 Menznau (CH); Fritz, Hans-Gerhard, Prof. Dr., 73066 Uhingen (DE); Cai, Quiongying, Prof. c/o Inst.f.Kunststofftechn., 70199 Stuttgart (DE)
(74) Representative: Hoeger, Stellrecht & Partner

(56) References cited:
- EP-A- 0 370 517
- EP-A- 0 510 559
- EP-A- 0 781 658
- EP-A- 0 864 574
- DE-A- 4 402 943

## Description

The present invention relates to a thermoplastic composition comprising a blend of a thermoplastic polyolefin and an ultra low-density polyethylene rubber which is silane-grafted and dynamically vulcanized. Further, the present invention relates to a process for making such thermoplastic elastomers.

In particular, the present invention relates to a thermoplastic composition comprising
(A) about 30 to 80 parts by weight of an ultra low-density polyethylene rubber (ULDPE rubber) vulcanizate;
(B) about 70 to 20 parts by weight of a crystalline thermoplastic polyolefin which is different from (A) and serving as a matrix forming component; and
(C) an extender oil in an amount of 40 to 120 parts by weight per 100 parts by weight of the ULDPE rubber component (A);
said ULDPE rubber vulcanizate component (A) being produced by subjecting a ULDPE rubber polymer (a) to a curing reaction, wherein in a first step an organosilane is grafted onto the ULDPE rubber polymer (a) and in a subsequent second step the grafted ULDPE rubber polymer (a') is dynamically vulcanized in the presence of a cross-linking agent comprising a catalyst.

Such compositions represent thermoplastic elastomeric materials on the basis of polymers and vulcanized rubber which may be still processed as thermoplastic materials and therefore may be recycled.

Such type of material is known from EP 0 510 559 A2 and also in its principal components from DE 44 02 943 A1.

EP 0 510 559 A2 describes in detail a thermoplastic vulcanizate based on crystalline polyolefin and a mono-olefin copolymer such as EPM or EPDM prepared in a dynamic vulcanization process wherein a rubber polymer is first grafted with an organosilane and in subsequent hydrolysis and condensation steps involving alkoxy groups encountering strong shear and normal stresses during melt-mixing with said molten plastic polyolefin. The compositions obtained, according to this reference, contain vulcanized rubber particles finely dispersed in the melt-processable plastic matrix constituted by the crystalline polyolefin and the composition itself exhibits elastomeric properties while maintaining excellent thermoplastic processing properties. In addition, eventually unreacted silane and cross-linking agent as well as by-products of the chemical reactions are all volatile compounds of small molecular weight which may be removed from the melt blends by an appropriate devolatilization equipment during manufacture and processing. The prepared thermoplastic vulcanized compositions are translucent, have a natural colour and no odour as compared with blends of similar composition, but including rubber which is cured with sulfur or phenolic curatives as, for example, described in US-patents 4,130,535 and 4,311,628.

While the curing technique according to EP 0 510 559 A2 using organosilane for cross-linking the rubber polymer component of the composition, is advantageous to obtain high gel contents in the vulcanized rubber polymer component (B), it unfortunately has the disadvantage that hydrolysis and condensation of the grafted organosilane groups is not complete when the product is exiting the manufacturing equipment so that even the finished products made of the compositions still comprise "living" material which changes its properties over time.

The object of the present invention is to provide a thermoplastic composition of the type described above which does not change its physical properties during or after the manufacturing step.

This object is solved in a thermoplastic composition as described above in that the cross-linking agent comprises an aqueous buffer solution having a pH in the range of from 8 to 15.

Surprisingly, it has been found that the addition of an aqueous buffer solution having a pH in the range of from 8 to 15 to the cross-linking agent composition provides for a highly improved cross-linking reaction which ensures that the hydrolysis and condensation reaction of the organosilane groups of the grafted rubber polymer component has been completed when the composition is exiting the manufacturing equipment. Therefore, the chemical structure and the physical properties of the material remain unchanged on subsequent moulding steps and in the finished products.

The composition may comprise to a large extent an extender oil which allows variation of hardness of the material within a wide range to meet the demands of the specific field of utilization of the composition. The present invention allows especially for the selection of crystalline polyolefin materials which are compatible not only with the rubber component, but also with such an extender oil. The extender oil is preferably incorporated into the polyethylene rubber (A) and can also be used to control the viscosity of the thermoplastic polyolefin (B) during the compounding step to controllably form a continuous matrix under high shear stresses and shear rates.

Because of the use of a highly efficient cross-linking agent which not only functions to catalyse the cross-linking reaction, but also accelerates the same and ensures that hydrolysis and condensation of almost all reactable organosilane groups grafted on the rubber polymer (a) is finished when the composition is leaving the manufacturing equipment. Thus, the constituents of the cross-linking agent and here especially the aqueous buffer solution having a pH in the range of from 8 to 15 is to a large extent responsible for the improved quality of the compositions comprising the vulcanized rubber component (A).

The inventive thermoplastic compositions including the vulcanized rubber polymer component (A) exhibit improved properties, i.e., good elasticity, high mechanical strength, excellent processability and high stability during molding and usage.

The ultra low-density polyethylene rubber polymer (a) used according to the present invention comprises a family of copolymers of ethylene and a mono-olefin or a diolefin, preferably produced by means of a metallocene catalyst process.

Metallocene catalysts produce copolymers of a narrow molecular weight distribution and uniform comonomer incorporation which makes them highly suitable as a rubber polymer component in the present invention.

Suitable comonomers are selected from 1-butene, 1-pentene, 1-hexene, 1-octene, 1-hexane and 1-octene and comparable mono-olefins where.1-butene, 1-hexene and 1-octene are especially preferred.

Although diolefins may be used as comonomer, mono-olefins are preferred, because they produce saturated copolymers with good stability.

Ultra low-density polyethylene behaves as an elastomer when the comonomer is present in an appropriate proportion. Such a proportion for the comonomer is preferably in the range of 20 to 40 % by weight, more preferably 25 to 30 % by weight, based on the weight of the rubber polymer component.

Preferred specific densities of the ULDPE component A are in the range of 0.855 to 0.90 g/cm³. These ULDPE types exhibit extremely low crystallinity and melting point, they are transparent, soft and flexible and therefore suitable as a preferred rubber component for the present invention.

The cross-linking of the ULDPE rubber polymer to form the ULDPE rubber vulcanizate (A) is done in two subsequent steps:
- first, a grafting reaction of an appropriate organosilane on a ULDPE rubber polymer (a) is initiated and, when completed,
- in a subsequent step, a dynamic vulcanization of alkoxy groups catalyzed by a cross-linking agent is performed.

Preferred ULDPE rubber polymers (a) to be subjected to a grafting and vulcanization reaction are characterized by a narrow molecular weight distribution of 1.8 ≤ M_{W}/M_{N} ≤ 2.5 and especially having a high molecular weight indicated by a melt index (measured at 190 °C, 2.16 kg) of less than 8.0 g/10 min. More preferably, the melt index is in the range of 0.5 to 1.0 g/10 min. which allows for producing a fully cured and covalent network structure.

Generally speaking, the amount of ULDPE rubber vulcanizate (A) in the thermoplastic composition according to the present invention is in the range of from 30 to 80 parts by weight based on 100 parts by weight of combined components (A) and (B). More preferably, the ULDPE rubber vulcanizate (A) is in the range of 40 to 75 parts by weight.

The crystalline thermoplastic polyolefin (B) may be a homopolymer or a copolymer.

For example, suitable crystalline thermoplastic polyolefins are isotactic polymers of mono-olefin such as propylene, ethylene, 1-butene and the like while propylene is preferred.

Polypropylene includes homopolymers and copolymers which can contain about 1 to 20 % by weight of ethylene or another olefin comonomer comprising 4 to 10 carbon atoms.

While metallocene polyethylene polymers are preferred as polymers of the rubber phase, in case of the thermoplastic polyolefin, ethylene is preferred as the comonomer only.

Improved properties of the inventive thermoplastic composition are obtained when the rubber polymer (A) and the crystalline thermoplastic polyolefin (B) show good compatibility between each other and also the extender oil. Improved compatibility between the polyethylene rubber vulcanizate (A) and the crystalline thermoplastic polyolefin (B) are found when, for example, a polypropylene containing ethylene copolymer (PP random or block copolymer) is used for the crystalline thermoplastic polyolefin (B) instead of a homopolypropylene in combination with the ULDPE rubber polymer vulcanizate (A).

Preferred polypropylene types are block or random copolymers containing a minor amount of ethylene, more preferably copolypropylene comprising blocks of polyethylene of short length, which is indicated, for example, as a small peak of polyethylene (about 20 to 25 gels/g of peak area) or a long tail of a polypropylene melt peak towards low temperature in DSC thermograms.

The extender oil component (C) used in the inventive compositions helps to improve the properties of the composition and to allow to cover a broader scope of grades in hardness.

The compatiblity of polypropylene with the extender oil may be estimated by a simple test concerning swellability of polypropylene when treated with extender oil (for details see US-patent 4,290,886). In this test, polypropylene specimens of the dimensions 2 x 12 x 35 mm were immersed in the extender oil selected and allowed to swell for 24 hours at 125 °C.

It has been found that, when in the equilibrium state, the uptake of extender oil by the crystalline polypropylene (B) is greater than 40 % by weight, the oil is considered as significantly compatible (and therefore suitable for use) with the polypropylene type selected.

The particular polypropylene chosen for the present invention will depend on the viscosity ratio of ULDPE rubber polymer and the crystalline polypropylene at the different levels of extender oil contained in the compositions. Further, the selection of the crystalline polypropylene will be influenced by manufacturing and processing conditions such as temperature, mixing tension, shear rate and so on.

For example, polypropylene having the ability to take up high amounts of extender oil at processing temperature has a lower viscosity than a polypropylene which is able to incorporate only small amounts of the extender oil. When charging the extender oil to the blends of polyethylene rubber polymer and crystalline thermoplastic polyolefin, the viscosities of the rubber polymer (a) and the crystalline polyolefin (B) the viscosity ratio of them will vary with the extender oil content incorporated in both of the components.

In practice of the present invention, the viscosity of rubber polymer (a) and polyolefin (B) not containing any amount of extender oil will be totally different from the situation after charging of the extender oil. Therefore, the addition of extender oil allows for controlling the viscosity of polymer (a) and thermoplastic polyolefin (B), especially by the selection of the polyolefin, preferably polypropylene, so as to obtain a better thermoplastic composition in which the curing of the rubber polymer component (a) occurs when the rubber polymer component (a) is present as micro-size particles dispersed in the thermoplastic polyolefin matrix (B).

The ability of the thermoplastic polyolefin component (B) to incorporate extender oil is even more important when the amount of extender oil used is high.

As pointed out above, preferred thermoplastic polyolefins as component (B) are polypropylenes comprising a minor molar proportion of ethylene which at the same time has a good compatibility with the ULDPE rubber vulcanizate component (A).

For these reasons, a polypropylene in the form of a crystalline copolypropylene (block or random copolymer) comprising a minor molar proportion of an α-olefin comonomer, preferably ethylene, comprising small microcrystalline regions of ethylene and, moreover, having the property of incorporating extender oil at 125 °C from about 40 % by weight to about 100 % by weight based on the weight of the polypropylene copolymer is preferred.

A preferred content of the crystalline thermoplastic polyolefin (B) is in the range of 55 to 20 parts based on 100 parts by weight of the rubber vulcanizate component (A) and the crystalline thermoplastic polyolefin component (B).

The ultra low-density polyethylene rubber vulcanizate component (A) is obtained by grafting the ULDPE rubber polymer (a) using an organosilane and to cure the same in a subsequent step by a cross-linking agent while mixing the same with the crystalline thermoplastic polyolefin (B).

During this process, first of all, chemical grafting of an organosilane to the ULDPE rubber polymer (a) is performed in the presence of a radical generating agent, the organosilanes being selected as polyfunctional organosilanes containing unsaturated vinyl groups and easily hydrolysable alkoxy groups.

Appropriate organosilanes for performing the process of this invention are, for example, vinyltrimethoxysilane (VTMOS), vinyltriethoxysilane (VTEOS), 3-methacryloxypropyl(trimethoxy)silane (MEMOS) and similar compounds. The most preferred organosilane is vinyltrimethoxysilane (VTMOS).

The radical generating agent for effectively initiating the grafting reaction of the organosilane onto the backbone of the rubber polymer (a) in practicing the present invention are preferably selected from 2,5-dimethyl 2,5-bis-(t-butylperoxy)hexan (DHBP), dicumylperoxide (DCUP), t-butylcumylperoxide (BCOP) or 1,3-bis(butylperoxy-isopropyl)benzene (DIPP). Most preferred radical generating agents are 2,5-dimethyl 2,5-bis(t-butylperoxy)hexane (DHBP) and dicumylperoxide (DCUP).

The proportions of organosilane and radical generating agent depend upon the vulcanizing degree desired in the rubber polymer vulcanizate (A) in the thermoplastic composition of the present invention. In addition, it depends on the selection of the crystalline thermoplastic polyolefin (B) and the reaction conditions. In general, the vulcanizing degree is quantitatively expressed as gel content and cross-linking density.

The gel content is defined as the percentage by weight of rubber insoluble in a specified solvent after extraction under specified conditions. For the present invention, the conditions are refluxing the thermoplastic composition sample in boiling xylene for 16 hours using a soxhlet extractor. The gel content is used to measure the extent of the curing reaction. In general, the higher the gel content, the higher is the vulcanization degree. The thermoplastic compositions of the present invention are produced by vulcanizing the blend of component (a) and (B) to the extent that the gel content of the rubber vulcanizate phase is more than 95 % by weight based on the weight of rubber vulcanizate component, preferably up to 97 % by weight.

The cross-linking density is usually expressed as the effective number of moles of cross-linked chains per milliliter of polymer which is inversely proportional to the molecular weight between cross-links. The cross-linking density of the ULDPE rubber vulcanizate (A) is determined by the equilibring swelling test in a good solvent (here: xylene) according to the theory of Flory and Rehner (cf. P.J. Flory and J. Rehner, J. Chem. Phys., 11, 512-530, 1943). The Flory Huggins interaction parameter for xylene at 81 °C used in this calculation is 0.33 according to Q. A. Trementozzi, J. Polym. Sci., 23, 887-906, 1957. In general, the higher the cross-linking density (or the less molecular weight between cross-links), the greater are the vulcanizing degree in the vulcanized rubber. The cross-linking density is an important structure parameter of the network developed within the rubber phase which is more sensitive to the vulcanizing degree than the gel content.

For example, even when the gel content of two compositions is almost the same as is the case when a level for the gel content is reached which is higher than 95 % by weight, the cross-linking density still shows significant changes. The magnitude of cross-linking density significantly affects the physical and mechanical properties of the thermoplastic composition such as strength, elasticity, compression set, oil resistance/swelling and tension set. According to the present invention, the thermoplastic composition produced by vulcanizing the blends of components (a) and (B) preferably shows a cross-linking density of the rubber vulcanizate component (A) of more than 10 x 10⁻⁵ moles/ml, preferably up to 40 x 10⁻⁵ moles/ml of rubber vulcanizate component (A).

The proportion of peroxide used with respect to the organosilane present during the grafting step should be limited such that free radical cross-linking does not become the predominant reaction mechanism during the grafting process. Such cross-linking caused by free radicals will have to be regarded as a premature cross-linking (scorching) of the ULDPE rubber component which might prevent an intimate mixture of the grafted/pre-cross-linked ULDPE rubber component with the crystalline thermoplastic polyolefin component (B) and further additives.

During tests for the determination of the gel content of the grafted rubber polymer (a'), it was found that the amount of peroxide should not be in excess of 0.5 parts by weight based on 100 parts by weight of the rubber polymer (a). For this reason, the preferable proportion of peroxide used in the grafting step is in the range of from 0.05 to 0.40 parts by weight based on 100 parts by weight of the rubber polymer component (a).

In the present invention, the thermoplastic composition is improved over the prior art especially by using an improved cross-linking agent which results in stable chemical and mechanical properties of the finished thermoplastic composition.

After the organosilane-grafted rubber polymer (a') and a crystalline thermoplastic polyolefin (B) are intimately mixed, cross-linking of the grafted rubber polymer (a') is performed by adding a cross-linking agent in a dynamic vulcanization process. During this process, hydrolysis and condensation of the alkoxy groups of the organosilane takes place and siloxane cross-links (-Si-O-Si-) between molecular chains of the rubber polymer. The cross-linking agent used according to the present invention comprises, in addition to the catalyst, an aqueous buffer solution having a pH in the range of from 8 to 15.

Preferable cross-linking agents in addition comprise a polyhydric alcohol and preferably also an emulsifier.

The polyhydric alcohol may be selected from various polyhydric alcohols, for example methanediol, ethylene glycol and the like, is useful to decrease the water vapour pressure of the aqueous solution, in other words to raise the boiling point of this solution. Most preferably by this component the boiling point of the cross-linking agent is increased to approach the temperature of the dynamic vulcanization process. Due to this, a cross-linking agent including the component water is still in the liquid state at the processing temperature during the vulcanization step leading to an intimate contact with the melt blend.

The catalyst used in the cross-linking agent, which may be, for example, dibutyltin dilaurate (DBTL), accelerates the cross-linking reaction. An emulsifier such a Emulgin (supplied by Henkel KG a.A.) is preferably a surfactant which significantly lowers the surface tension and therefore helps to form a colloidal suspension in which the liquid droplets of catalyst are suspended in the polar aqueous liquid. By using this technique, a relatively low amount of catalyst may be uniformly dispersed in the cross-linking agent liquid.

In general, the dynamic vulcanization process according to the present invention is continued until complete cross-linking of the rubber polymer which usually takes a time of 6 to 8 minutes when using a twin-screw extruder aggregate. This period of time is already sufficient to ensure full vulcanization of the rubber polymer component (a') producing a chemically and mechanically stable thermoplastic composition.

Surprisingly, it was found that using an aqueous buffer solution in the cross-linking agent having a pH in the range of from 8 to 15 such buffer solution acts as a co-catalyst of the cross-linking catalyst, for example dibutyltin dilaurate.

The pH of the buffer solution added to the cross-linking agent according to the present invention may be controlled by the addition of inorganic salts soluble in water such as phosphates, borates, carbonates, ammonia and others and/or inorganic bases such as sodium hydroxide, potassium hydroxide and others which are also soluble in water as well as organic water-soluble bases. Preferably inorganic compounds are used for controlling the buffer pH.

However, it is important to check and make sure that the buffer components will not react in an uncontrolled way with the constituents contained in the cross-linking agent, for example the polyhydric alcohol, the catalyst and the emulsifier. Especially, it should be avoided that buffer components form complexes with the metal component (for example tin) in the catalyst or will esterify the polyhydric alcohol or perhaps destroy the catalyst suspension. In view of the above, phosphates and ammonia as components of the buffer solution are not preferred, since especially they are not able to control the pH in the desired range also at high temperatures. Therefore, preferred aqueous buffer solutions according to the present invention comprise as pH controlling components carbonates, bicarbonates and borax.

Generally speaking, the pH of the aqueous buffer solution will be set as high as possible, because the rate of hydrolysis and condensation of the alkoxy group in the organosilane is increased with increasing concentration of hydroxy ions. However, recently it was found that some clevage of poylsiloxanes in basic media may occur. This would lead in the present case, to a clevage of already formed cross-links and would counteract to the desire to have highly cross-linked rubber vulcanizate. In view of the above, a preferred pH range runs from 9 to 12.

As mentioned above already, the addition of extender oil to the thermoplastic composition according to the present invention improves the flexibility, elasticity, heat stability and processability and is a means to control the hardness of the composition. Further, the extender oil leads to a reduction of the costs of the material and lowers the glass transition temperature Tg of the PP matrix.

Suitable extender oils are paraffinic oil, naphthenic oil, esters of monocarboxylic acids, esters of dicarboxylic acids or their oligomers which are generally known as extender oils. In order to achieve improved properties of the thermoplastic composition, the extender oil should be selected to have good compatibility or miscibility with both the crystalline thermoplastic polyolefin (B) and the rubber vulcanizate component (A) so that it may be incorporated in each one of these two phases and does not constitute a further phase in the composition.

In addition to what has been known for the application of extender oils, according to the present invention, the extender oil is in addition selected with regard to its ability to scavange free radicals. Many types of extender oils can react with free radicals due to the presence of double bonds, tertiary carbon atoms and/or heterocyclic aromatics containing nitrogen, sulfur or oxygen. In order not to interfere with the peroxide initiated grafting reaction of the organosilane, it is preferred to add the extender oil only after completing this organosilane grafting reaction.

The above-described equilibrium swell test is at the same time a means to estimate the compatibility of the extender oil with the other components in the compositions.

Most suitable for the purpose of the present invention are paraffinic oil or esters of aliphatic monocarboxylic acids. Esters of dicarboxylic acids are found to be less effective and polyethylene glycol esters were least effective. The quantity of extender oil added depends on the properties desired for the thermoplastic composition and the upper limit mainly depends upon the properties of the rubber vulcanizate component (A) such as its crystallinity, molecular weight, molecular weight distribution and the cross-linking density of the rubber vulcanizate phase. The upper limit is exceeded and at the same time indicated when the thermoplastic composition releases oil to the surface. The upper limit of the extender oil in the present invention is therefore 120 parts by weight per 100 parts by weight of the ULDPE rubber vulcanizate component (A). Generally speaking, vulcanized rubber phases having a high cross-linking density have a lower upper limit for the content of extender oil.

In addition to the three components (A), (B) and (C) of the inventive composition as well as the cross-linking agent, the composition may include fillers, antioxidants, stabilizers, processing aids, lubricants, antistatic agents, pigments, flame retardants and other additives known in the rubber compounding art. Proportions of such additives will depend upon the properties desired in the thermoplastic composition according to the present invention.

Preferred embodiments of the invention are described in the dependent claims.

In the following, the process for manufacture of the inventive thermoplastic composition will be explained in some more detail.

Thermoplastic compositions according to the present invention, which are based on thermoplastic crystalline polyolefin and a thermoplastic rubber vulcanizate may be prepared using conventional mix-knedding equipment preferably a twin-screw extruder aggregate as described in EP 0 510 559 A2.

The vulcanization according to this process is caused by the reaction of hydrolysis and condensation of alkoxy groups in the grafted silane and at the same time by stresses which are applied by the action of the stress σ which is just over a critical stress σ_{crit}, i.e., σ > σ_{.crit}. This allows to simultaneously cross-link the rubber polymer component (a') and disperse it as fine particles in the crystalline thermoplastic polyolefin matrix (B). The characteristics of the inventive compositions are that the rubber component is fully cured when it leaves the extruder aggregate and that the rubber component is dispersed as fine, micro-sized particles having the desired cross-linking density. The compositions according to the present invention can be processed by conventional plastic processing techniques such as extrusion, injection molding and the like. Scrab or flashing can be salvaged and recycled.

Two typical processes are described here as examples, namely a two-step process and a single-step process with cascade and tandem combination of extruders, respectively.

During the first step of the inventive process, grafting of the organosilane onto the rubber polymer component (a) is carried out by mixing the organosilane, peroxide catalyst and the rubber polymer (a) at a temperature of about 180 to 200 °C in an extruder aggregate so as to generate free radicals starting the grafting reaction during heating. In contrast to usual processes of organosilane grafting of polyethylene (see, for example, GB-1286460 A1), the cross-linking catalyst is not used at this stage. According to the inventive process, use of the cross-linking catalyst in the grafting step already would cause hydrolysis and condensation of the organosilane. It is important to avoid or at least minimize the gel formation or a premature curing reaction of the grafted silane during this step in order to obtain high quality products.

After the step of grafting the organosilane onto the rubber polymer molecular chains, the crystalline thermoplastic polyolefin (B), preferably polypropylene, is metered and the extender oil, and, if desired, filler or other additives, may also be added by using metering pumps and/or gravimetric feeders. At this point in time, there is no need to preserve peroxide reactivity or even more the free radicals which may still be present or may be created as they may cause degradation of polypropylene resin.

Stabilizers including free radical interceptors, antioxidants and light stabilizers are added to counteract possible free radical activities. The amount of stabilizers used is preferably in the range of from 0.2 to 0.4 parts-by weight, based on 100 parts by weight of the rubber vulcanizate component (A) and the thermoplastic polyolefin component (B).

The order of addition of the various ingredients may vary. For example, the filler and extender oil can be partially or wholly mixed with the rubber component before grafting the organosilane onto the ULDPE rubber component. However, if the extender oil is fed together with silane and peroxide, the grafting reaction rate will be reduced by the delution effect and the free radical consumption of the extender oil will occur as discussed before. Therefore, preferably, according to the present inventive process, the extender oil is added after finishing the grafting reaction.

During mixing, a barrel zone in the extruder is passed in which the crystalline thermoplastic polyolefin (B) is melted and intimately mixed together with silane-grafted rubber component (a') and further additives at a temperature above its melting point. This mixing-dispersing process includes application of stresses just over σ_{crit} to ensure that the rubber component (a') is divided into dispersed micro-sized particles. As is known from addition of fillers to a rubber matrix, shear-, kneading- and mixing elements in the extruder should be reasonably combined to generate preferable stresses in the velocity field and transfer to the rubber particles. Such type of stresses are preferably produced in the gaps which are formed between two co-rotating special kneading blocks.

In practice of the present invention in the two-step process, it must be avoided to expose the mixture of the first stage to ambient humidity which may lead to a premature curing of the rubber polymer (a'). However, in the absence of a catalyst, the mixture of the first stage would normally not readily react and start premature curing under surrounding atmosphere, and so the storage time can be extended up to two hours without creating deleterious effects.

During the second stage or step, the cross-linking agent is metered into the extruder by a diaphragm pump, the dynamic vulcanization process taking place at a temperature of 200 to 240 °C in a so-called barrel zone with strong mixing/kneading elements of the twin screws. The desired degree of vulcanization is achieved by using highly efficient cross-linking agent and the high mix-kneading effect of the screw configuration.

Low molecular gaseous substances, such as unreacted organosilane and parts of the cross-linking agent as well as by-products of chemical reactions, are thoroughly withdrawn by a devolatilization equipment.

For manufacturing the thermoplastic compositions according to the present invention, it is essential that the vulcanization is performed under the action of sufficient high stresses as explained above:
- The effect of the sufficiently high stresses present in the initial stage of the vulcanization makes sure that the dispersing action is present simultaneously with the occurrance of the cross-linking reaction so as to prevent the formation of an aggregate network by which the thermoplastic character of the compositions would be affected.
- Due to the mechanical, thermal-chemical cross-linking process of the present invention, the vulcanization time may be shortended and a product stable in its mechanical and chemical properties is obtained when the thermoplastic composition exits the aggregate.

When the stresses applied to the polymeric products in the compounding unit are above a critical stress level, the stresses are insufficient to induce bond breakage in the polymer chains, but is sufficient to increase the bond length and bond angle by which the potential energy of the chains increases. As a result, the higher energy state of the bonds promotes the reactivity of the polymer chains, i.e., the stresses applied can lead to a mechanical activation of the thermo-chemical reaction.

The inventive thermoplastic compositions may be injection-molded into test specimens on which the following tests were performed.

The stress-strain properties of the compositions are determined in accordance with the procedures of DIN 53504 by using the Dumpbell test specimens with a size of 75 x 4 x 2 mm. The tension set is determined in accordance with ASTM D412 test method A by stretching the Dumpbell specimen to twice its original length at room temperature and holding it for 10 minutes before releasing the same. Compression set is determined in accordance with DIN 53517 by compressing the disc samples (Ø 13 x 6 mm) for 22 hours at 70 °C. Oil swelling is determined in accordance with ASTM D471 by submerging the specimens in ASTM #3 oil for 22 hours at 70 °C. The flow properties estimated by the MFI (melt flow index) at 230 °C and dynamic rheological properties (η*, G' and G'') which are measured using a Reometrics RMS 800 (obtainable from Rheometric Corp., Summit N.J., USA) with parallel plate tools and running a dynamic frequency sweep at 230 °C.

In order to find optimum properties for the rubber phase particles of the inventive compositions the following tests were carried out with a ZSK 25 extruder with a L/D ratio of 40.

The ULDPE rubber polymer (a) in the form of an ethylene-octene copolymer, coated with vinyltrimethoxysilane (VTMOS) and 2,5-dimethyl-2,5-di(t-butylperoxy)hexane (DHBP) in an external mixing station, is fed in the proportions listed in Table 1 into the above ZSK 25 extruder, maintaining the following conditions: temperature profile of the barrel is from 180 to 200 °C, screw speed is 150 rpm, output is 2 kg/h.

Before mixing, the peroxide DHBP was dissolved in the organosilane VTMOS to form a solution in order to avoid local free-radical premature curing due to concentrated DHBP contacting the rubber melt, and the solution can either be sprayed on the surfaces of rubber particles during tumbling until all solution has been taken up, then the mixture is fed into the ZSK 25 extruder, or the solution of organosilane and peroxide is directly fed into the ZSK 25 extruder by means of a diaphragm pump.

The extrudate strands were cooled down by air, pelletized and then immediately compression molded into films (250 µm) and plates with 2 mm thickness at 160 °C.

These specimens were soaked in 55 to 60 °C water with 0.5 % DBTL for about 6 days to vulcanize the grafted rubber polymer. After drying, the film specimens cut to 2 x 2 mm pieces were used in determing gel content and the plates cut to 2 x 12 x 35 mm specimens were used in determing cross-linking density.

Data obtained from these tests are included in Table 1. The data indicate that the cured rubbers prepared from ULDPE rubber (A) containing low proportion of octene with low molecular weight have lower gel content and crosslinking density, in other words, have a lower vulcanizing degree. The data also show that ULDPE rubber E containing more than 30 % octene and a density of 0.859 g/cm³ has also a lower vulcanizing degree. The cured rubbers prepared from ULDPE rubber D, containing 28 % octene and high molecular weight exhibit a higher value for the gel content and cross-linking density when compared to that of ULDPE rubber A and E.

**Table 1**

| Grafted Rubber | A1 | A2 | A3 | A4 | D2 | D3 | D4 | D5 | E1 | E2 | E3 | E4 | E5 |
|---|---|---|---|---|---|---|---|---|---|---|---|---|---|
| | | | | | | | | | | | | | |
| ULDPE Rubber¹ | A | → | → | → | D | → | → | → | E | → | → | → | → |
| Density | 0.870 | → | → | → | 0.863 | → | → | → | 0.859 | → | → | → | → |
| Octene content, wt % | 24 | → | → | → | 28 | → | → | → | ~30 | → | → | → | → |
| MI at 190°C/2.16 kg | 5.0 | → | → | → | 0.5 | → | → | → | 1.0 | → | → | → | → |
| Graft Compound² | | | | | | | | | | | | | |
| Vinyltrimethoxysilane | 3.0 | 3.0 | 3.0 | 3.0 | 3.0 | 3.0 | 3.0 | 3.5 | 3.0 | 3.0 | 3.0 | 3.0 | 3.8 |
| 2,5-dimethyl-2,5-di (t-butylperoxy)hexane | 0.06 | 0.086 | 0.15 | 0.20 | 0.086 | 0.15 | 0.20 | 0.175 | 0.06 | 0.086 | 0.15 | 0.20 | 0.19 |
| Silane/Peroxid | 50 | 35 | 20 | 15 | 35 | 20 | 15 | 20 | 50 | 35 | 20 | 15 | 20 |
| Gel Content, wt % | 91 | 93 | 93 | 93 | 96 | 98 | 98 | 98 | 95 | 97 | 97 | 97 | 97 |
| Cross-linking Density mole/ml x 10⁻⁵ | 19 | 24 | 27 | 29 | 29 | 35 | 37 | 40 | 19 | 29 | 32 | 34 | 39 |
| Extender Oil Swell³ at 125°C, wt % | 239 | 198 | | | 180 | 165 | 162 | 151 | 241 | 190 | 175 | 172 | 157 |

| | | | | | | | | | | | | | |
|---|---|---|---|---|---|---|---|---|---|---|---|---|---|
| ¹ ULDPE Rubbers A, D and E are Engage polyolefin (DOW Chem. Co.) indicated properties are cited from commercial catalogues | | | | | | | | | | | | | |
| ² Proportions are based on 100 parts of ULDPE rubber | | | | | | | | | | | | | |
| ³ Risella oil G33 (Shell Risella Oil Co.) | | | | | | | | | | | | | |

Cured ULDPE rubbers on the basis of the type D polymer were prepared to demonstrate the effect of including a certain amount of extender oil before the grafting reaction, as compared to the absence of the extender oil. The grafting reactions of silane on ULDPE rubber were performed by the afore described process. The extender oil was added by a diaphragm pump in the same zone of feeding as the solution of silane and peroxide.

For the cured rubber containing certain amount of the extender oil, the gel content is expressed as percent of insoluble rubber based on the weight of the grafted rubber exclusive of the extender oil. The cross-linking density can be determined by using an improved Flory-Rehner equation, G. Kraus, Rubber chem. Technol. 30, 928-951, 1957, and expressed as the value based on unextracted volume including the extender oil.

From these tests follows that preferably the extender oil component (C) should be added only when the grafting reaction has been completed to a large extent.

Data for various cured rubber polymers containing a certain amount of the extender oil are shown in Table 2. Grafted rubber D-a0 does not contain extender oil for comparison. The other grafted rubber polymers contain the proportions of the extender oil indicated. The data show that the cross-linking density decreases with an increasing content of extender oil in the cured rubber, though the gel content was not substantially reduced. This phenomenon is related to the dilution effect of the extender oil on the concentrations of silane and peroxide leading to a reduced reaction rate of grafting and reflect free-radical consumption due to the presence of unsaturated sequences in the extender oil.

**Table 2**

| Grafted Rubber | D-a0 | D-a1 | D-a2 | D-a3 | D-b1 | D-b2 | D-b3 |
|---|---|---|---|---|---|---|---|
| ULDPE Rubber | D¹ | → | → | → | → | → | → |
| Vinyltrimethoxysilane² | 3.5 | → | → | → | → | → | → |
| 2,5-dimethyl-2,5-di (t-butylperoxy)hexane³ | 0.175 | 0.175 | 0.175 | 0.175 | 0.20 | 0.20 | 0.20 |
| Silane/Peroxide | 20 | 20 | 20 | 20 | 17.5 | 17.5 | 17.5 |
| Extender Oil⁴ | 0 | 20 | 40 | 60 | 20 | 40 | 60 |
| Gel Content, wt % | 97 | 95 | 95 | 95 | 96 | 95 | 95 |
| Cross-linking Density mole/ml x 10⁻⁵ | 43 | 31 | 28 | 22 | 42 | 37 | 26 |

| | | | | | | | |
|---|---|---|---|---|---|---|---|
| ¹ ULDPE rubber is Engage polyolefin shown in Table 1 | | | | | | | |
| ^{2,3} Proportions are same as in Table 1 | | | | | | | |
| ⁴ Risella G33 Oil (Shell Risella Oil Co.), proportions are based on 100 parts of ULDPE rubber | | | | | | | |

The afore-described single stage process was adopted to manufacture the compositions by using the twin screw extruder aggregate described in EP 0 510 590 and using the following conditions, 200 rpm of screw speed, a temperature profile of 180 to 220 °C and 30 kg output per hour. 50 parts of the ULDPE rubber D with octene comonomer content of 28 % (density 0.863 g/cc; Engage polyolefin by DOW Chem. Co.) and 3.7 parts of a grafting solution of vinyltrimethoxysilane (VTMOS) and 2,5-dimethyl-2,5-di(t-butylperoxy)hexane (DHBP) (weight ratio 20:1) were all mixed in the extruder to silane graft the ULDPE rubber polymer.

Using the same type of dosing block as for the ULDPE rubber, 80 parts of extender oil (paraffinic oil with viscosity of 64,4 mm²/s at 40 °C) per 100 parts of the ULDPE rubber were fed by a metering pump, then 50 parts of a polypropylene block copolymer with high crystallinity and MFI of 5 at 230 °C/2.16 kg (Mosten 52.517 from Czecho), was fed to the melt to get a physical blend by intimate mixing, and then the cross-linking agent was introduced by a diaphragm pump dosing 2 parts per 100 parts of ULDPE rubber and crystalline polypropylene. The vulcanization was performed during this stage.

The extrudate pellets of the compositions were injection molded into specimens of dumbbell, disc and plate form, for which the mechanical and physical properties, elasticity and dynamic rheologies were determined. Data for the preparing compositions are shown in Table 3.

Usual prior art cross-linking agent (DE 44 02 943 A1) usually consists of:

| | |
|---|---|
| distilled water | 50 parts |
| ethylene glycol | 50 parts |
| dibutyltin dilaurate | 2 parts |
| emulsifier | 0.15 parts |

The improved cross-linking agent according to the present invention have the distilled water portion exchanged for a buffer solution. All other components and proportions may be the same as in usual cross-linking agents. The salts and bases forming part of the aqueous basic buffer solutions are shown in Table 3.

Composition 1 was dynamically vulcanized using the above-defined prior art cross-linking agent whereas compositions 2 to 5 were vulcanized using inventive cross-linking agents in which the aqueous buffer solutions were comprised of various salts and bases as contained in Table 3.

The properties of the compositions used for determining the efficiency of the improved cross-linking agent, especially with respect to rapid and complete vulcanization in the limited time of the dynamic vulcanization step are the elasticity, tension set, compression set, and melt viscosity.

As is apparent from the foregoing, vulcanization using inventive cross-linking agents substantially reduces the tension and compression set and increases the viscosities of the compositions.

The buffer solution comprising sodium bicarbonate with pH of 11 has the strongest accelerating action for hydrolysis and condensation of silane grafted ULDPE when compared to the cross-linking agents comprising distilled water only.

**Table 3**

| Composition | 1 | 2 | 3 | 4 | 5 |
|---|---|---|---|---|---|
| ULDPE Rubber D¹ | 50 | → | → | → | → |
| Vinyltrimethoxysilane | 3.5 | → | → | → | → |
| 2,5-dimethyl-2,5-di (t-butylperoxy)hexane | 0.175 | → | → | → | → |
| Polypropylene² | 50 | → | → | → | → |
| Extender Oil³ | 80 | → | → | → | → |
| Stabilizer⁴ | 0.3 | → | → | → | → |
| Cross-linking Agent | 2 | → | → | → | → |
| Constituents in aqueous Buffer Solution | water | NaHCO₃ | NaHCO₃ NaOH | Na₂HPO₄ | NaHCO₃ NaOH |
| pH Value in Buffer Solution | 5 | 9.5 | 10 | 10 | 11 |
| Hardness, Shore A | 90 | 88 | 88 | 88 | 88 |
| 100% Modulus, Mpa | 8.8 | 7.8 | 8.8 | 8.1 | 9.1 |
| Tensile Strength, Mpa | 13.4 | 11.5 | 12.5 | 11.7 | 12.0 |
| Elongation at Break, % | 359 | 313 | 276 | 270 | 207 |
| Tension Set, % | 24 | 24 | 20 | 20 | 19 |
| Compression Set, % at 70 °C/22 h | 58 | 57 | 53 | 53 | 51 |
| ASTM #3 Oil Swell, % at 70 °C/22 h | 41 | 66 | 62 | 63 | 65 |
| Complex Viscosity, η∗ x 10³ Pa.s, at ω=1 rad/s, 230 °C | 1.69 | 2.37 | 2.57 | 2.41 | 3.71 |
| MFI at 230 °C/10 kg | 322 | 92 | 79 | 113 | 50 |

| | | | | | |
|---|---|---|---|---|---|
| ¹ ULDPE rubber D is Engage polyolefin shown in Table 1 | | | | | |
| ² Mosten 52517 (Chemopetrol Co. Czecho) | | | | | |
| ³ Risella G33 oil (Shell Risella Oil Co.) | | | | | |
| ⁴ 0.2 parts of Irganox B215 and 0.10 parts of hindered amine light stabilizer | | | | | |

The proportions of VTMOS and DHBP and extender oil are shown when the weight of ULDPE rubber is considered to be 100 parts. The proportions of stabilizer and cross-linking agent are shown when the total weight of ULDPE rubber and polypropylene is considered to be 100 parts.

The buffer solutions used instead of water in the inventive cross-linking agents have been selected by the maximum torque comparison under the dynamic vulcanization process performed in the Haake Rheomix described earlier. The compoundings used in this test are as follows:

| | |
|---|---|
| ULDPE rubber (d=0.863 g/cc) | 23 g |
| Vinyltrimethoxysilane | 0.69 g |
| 2,5-dimethyl-2,5-di(t-butylperoxy)hexane | 0.035 g |
| Polypropylene (RB144B, Borealis Co.) | 23 g |
| Cross-linking agent | 1.2 g |

Various salts and bases as components of the buffer solution, the pH value of the buffer solution and the maximum torques recorded after adding the inventive cross-linking agents are shown in Table 4.

If the maximum torque was higher, the buffer solution is considered as substantially accelerating hydrolysis and condensation of the grafted silane in the rubber phase in comparison to the prior art cross-linking agent. It is apparent that the inventive buffer solutions have a substantial effect increasing mixing torque compared to water. Except aqueous ammonia and ammonia buffer solution (NH₄Cl+NH₄OH) owing to their instability, especially under the high temperature conditions of the process show minor effects only. The buffer solution consisting of sodium bicarbonate (NaHCO₃ + NaOH + H₂O) exhibits quite a high value of the maximum torque, that means it has good accelerating action on curing of silane.

A catalytic effect of bicarbonate was found for functional silanes like methyltrimethoxysilane, K. A. Smith, J. Org. Chem. 1986, 51, 3827-3830, and in addition that it acts as a basic catalyst. For the end torques the difference in mixing torques during the process from adding the cross-linking agent to the end of mixing are reported. If the mixing torque is quickly reduced, or the end torque is a high negative value, two possibilities may exist. The one is that the rubber phase is divided into finer particles; the other is that the siloxane cross-links (-Si-O-Si-) may undergo degradation at high pH values.

**Table 4**

| Constitutions of Buffer Solution | Salt Content mole/l | pH | Maximum Torque ΔQ_{M}=Q_{M}-Qₜ₌₉ₘᵢₙ m.g | End Torque ΔQ_{En}=Q_{En}-Qₜ₌₉ₘᵢₙ |
|---|---|---|---|---|
| | | | | |
| Distillation Water | 0 | 5 | 473 | +109 |
| Aqueous Ammonia | | 10 | 462 | + 51 |
| NH₄Cl + NH₄OH + H₂O | 0.13 | 9 | 477 | - 15 |
| Borax + HCl + H₂O | 0.013 | 9 | 498 | + 83 |
| Borax + NaOH + H₂O | 0.013 | 10 | 527 | - 94 |
| Na₂CO₃ + NaOH + H₂O | 0.050 | 11 | 540 | -173 |
| Na₂CO₃ + NaOH + H₂O | 0.025 | 11 | 513 | -141 |
| Na₂CO₃ + NaOH + H₂O | 0.025 | 10 | 521 | - 19 |
| NaHCO₃ + NaOH + H₂O | 0.050 | 11 | 618 | -127 |
| NaHCO₃ + NaOH + H₂O | 0.025 | 11 | 616 | - 28 |
| NaHCO₃ + NaOH + H₂O | 0.025 | 10 | 572 | + 85 |
| Na₂HPO₄ + NaOH + H₂O | 0.013 | 12 | 489 | -112 |

The maximum torque ΔQ_{M}=Q_{M}-Qₜ₋₉ₘᵢₙ is defined as the different value of the maximum torque and the torque at the time of adding the cross-linking agent, i.e., at total mixing time is 9 min. The end torque ΔQ_{En}=Q_{En}-Qₜ₋₉ₘᵢₙ is the different value of the end torque at the finishing time of mixing and the torque at t = 9 min.

### Reference Examples:

Thermoplastic elastomer compositions based on ULDPE rubber and various types of polypropylene were prepared following the technique of the above-described Examples, by using the usual cross-linking agent and an output of 15 kg per hour.

In order to demonstrate that polypropylene components are more effective in improving the properties of compositions, the same proportions of the components and the same processing conditions as for preparing compositions of the invention were used. The types of polypropylene used here included random and block copolymers having different melt viscosities, crystallinities, extender oil swell are set forth in Table 6.

It is apparent from Table 5 that composition 10 shows good mechanical properties, and especially the lowest compression set, low oil swell and high melt viscosity, compared to other compositions in Table 5. It is considered that polypropylene PP-5 included in composition 10 comprises a sequence length of ethylene (a small peak area shown in Table 6) and an appropriate swell of the extender oil (about 40 to 50 % by weight).

This result illustrates the importance of the compatibility of polypropylene with ULDPE rubber, and the extender oil swell in polypropylene. When a high amount of extender oil was incorporated in the compositions, the latter is even more important. For example, PP-1, PP-2 and PP-3 are the random copolypropylene with the similar structure and high extender oil swell, the properties of these three compositions, composition 6, 7 and 8 shown in Table 5, containing those polypropylene components are essentially similar even though the MFI of PP-1, PP-2 and PP-3 are different. Compositions 13 and 14 containing PP-8 and PP-9, respectively, which have lower swell amount for the extender oil, exhibit high oil swell of ASTM #3 oil and high melt viscosity. These properties indicate that the rubber phase may be partially present in big blocks or large areas or in a co-continuous phase with the polypropylene matrix component.

The reason herefor is that the viscosity of polypropylene is essentially unchanged, thus the viscosities of both components does not match during the action of strong stresses in the extruder. The more soft rubber phase, i.e., lower viscosity phase, may tend to form a continuous phase.

**Table 5**

| Composition | 6 | 7 | 8 | 9 | 10 | 11 | 12 | 13 | 14 |
|---|---|---|---|---|---|---|---|---|---|
| ULDPE Rubber D¹. | 50 | → | → | → | → | → | → | → | → |
| Vinyltrimethoxysilane | 3.0 | → | → | → | → | → | → | → | → |
| 2,5-dimethyl-2,5-di (t-butylperoxy)hexane | 0.15 | → | → | → | → | → | → | → | → |
| Polypropylene | 50 | → | → | → | → | → | → | → | → |
| Polypropylene Grade² | PP-1 | PP-2 | PP-3 | PP-4 | PP-5 | PP-6 | PP-7 | PP-8 | PP-9 |
| Extender Oil³ | 120 | → | → | → | → | → | → | → | → |
| Stabilizer⁴ | 0.3 | → | → | → | → | → | → | → | → |
| Usual Cross-linking Agent | 2 | → | → | → | → | → | → | → | → |
| Hardness, Shore A | 81 | 81 | 81 | 82 | 82 | 83 | 81 | 81 | 80 |
| 100% Modulus, Mpa | 6.0 | 5.9 | 6.1 | 6.5 | 6.8 | 8.2 | 4.9 | 5.7 | 4.6 |
| Tensile Strength, Mpa | 9.3 | 9.7 | 10.0 | 9.1 | 9.0 | 11.1 | 9.4 | 8.7 | 7.8 |
| Elongation at Break, % | 571 | 590 | 590 | 496 | 400 | 458 | 665 | 431 | 551 |
| Tension Set, % | 23 | 21 | 21 | 23 | 20 | 22 | 19 | 20 | 20 |
| Compression Set, % at 70 °C/22 h | 71 | 68 | 68 | 70 | 59 | 70 | 67 | 67 | 70 |
| ASTM #3 Oil Swell, % at 70 °C/22 h | 63 | 67 | 67 | 67 | 62 | 59 | 80 | 103 | 99 |
| Complex Viscosity, η* x 10³ Pa.s, at ω=1 rad/s, 230 °C | 6.23 | 6.94 | 6.76 | 6.68 | 14.51 | 8.19 | 15.10 | 22.90 | 15.39 |
| MFI at 230 °C/10 kg | 49 | 43 | 16 | 47 | 12 | 14 | 7.2 | 15 | 32 |

| | | | | | | | | | |
|---|---|---|---|---|---|---|---|---|---|
| ¹ ULDPE rubber D is Engage polyolefin shown in Table 1 | | | | | | | | | |
| ² Properties and structures of polypropylene are shown in Table 6 | | | | | | | | | |
| ^{3,4} Same as Table 3 | | | | | | | | | |

Proportions are same as in Table 3.

**Table 6**

| Polypropylene | Grade and Source | Chemical Structure | MFI 190 °C 2.16 kg | η* x 10³ Pa.s, 210 °C at 1 rad/s | Crystallinity % | E-Modulus MPa | Oil Swell³ at 125 °C wt % |
|---|---|---|---|---|---|---|---|
| PP-1 | Borealis Co. | Random | 8 | 1.76 | 47 | 1150² | |
| PP-2 | Borealis Co. | Random | 6 | 1.65 | 44 | 850² | 94 |
| PP-3 | Borealis Co. | Random | 1.8 | 2.80 | 41 | 850² | 90 |
| PP-4 | Mosten Czecho | Block | 5 | 3.68 | 51 | 1100 | 28 |
| PP-5 | Vestolen Co. | Block | 1.9 | 6.16 | 46¹ 8.0¹ | 1400 | 44 |
| PP-6 | Vestolen Co. | Block | 1.3 | 10.00 | 49 | 1400 | 22 |
| PP-7 | Novolen BASF | Random | 8 | 2.02 | 46 | 1050 | 86 |
| PP-8 | Novolen BASF | Block | 6 | 2.58 | 53 | 1250 | 29 |
| PP-9 | Hostalen | Block | 14 | 0.92 | 52 | 1000 | 32 |
| PP-10 | Daelim Korean | Block | 2 | 5.47 | 50 | 1250² | 79 |

| | | | | | | | |
|---|---|---|---|---|---|---|---|
| Chemical structure, MFI and E-modulus are cited from commercial catalogues. ¹ Crystallinity of PP is 46 %, 8.0 % belongs to crystalline of PE block | | | | | | | |
| ² Flexual modulus | | | | | | | |
| ³ The equilibrium oil swell in Risella Oil G33 | | | | | | | |

Further compositions were prepared, in which the order of addition of the extender oil was varied. The amount of extender oil incorporated was 80 parts based on 100 parts of ULDPE rubber. The results are shown in Table 7. The procedure for preparing composition 15 is the same as in the afore-described Example using a single step process, the extender oil was added prior to the grafting reaction of silane. Composition 16 was prepared by a two step process, in which processing conditions were the same as in that single step process, but the extender oil was added after the grafting reaction. The data show that superior properties of the composition are obtained when the extender oil is added after the silane grafting reaction. Composition 16 exhibits better mechanical properties and improved compression set and oil resistance values.

**Table 7**

| Compositions | 15 | 16 |
|---|---|---|
| ULDPE Rubber D¹ | 50 | → |
| Vinyltrimethoxysilane | 3.5 | 3.5 |
| 2,5-dimethyl-2,5-di (t-butylperoxy)hexane | 0.175 | 0.10 |
| Polypropylene PP-2² | 50 | → |
| Extender Oil³ | 80 | → |
| Stabilizer⁴ | 0.3 | → |
| Cross-linking Agent Normal | 2 | → |
| Hardness, Shore A | 83 | 84 |
| 100% Modulus, Mpa | 6.1 | 6.4 |
| Tensile Strength, Mpa | 10.3 | 13.8 |
| Elongation at Break, % | 462 | 605 |
| Tension Set, % | 23 | 25 |
| Compression Set, % at 70 °C/22 h | 63 | 41 |
| ASTM #3 Oil Swell, % at 70 °C/22 h | 91 | 48 |
| Complex Viscosity, η∗ x 10³ Pa.s, at ω=1 rad/s, 230 °C | 23.41 | 13.73 |
| MFI at 230 °C/10 kg | 11 | 35 |

| | | |
|---|---|---|
| ¹ ULDPE rubber D is Engage polyolefin shown in Table 1 | | |
| ² Shown in Table 6 | | |
| ^{3,4} Same as Table 3 | | |

Proportions are same as in Table 3.

### Description of preferred embodiments:

The following Examples are presented to illustrate the present invention. All parts and percentages herein are by weight unless specifically stated otherwise.

In the attached Drawing:

Figure 1 shows a schematical representation of an advantageous set-up of an extruder cascade used for producing the inventive composition.

Figure 2 shows a schematical representation of a still improved extruder cascade.

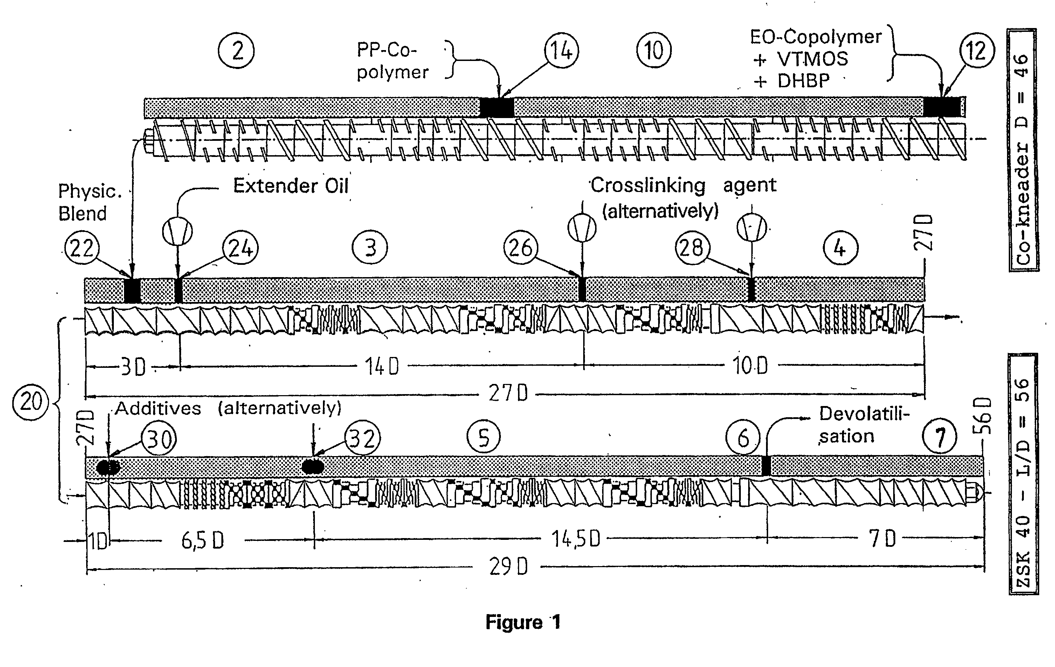

With reference to Figure 1, a single stage process is described in the following yielding the inventive composition.

Functional zone ① of a BUSS co-kneader 10 serves to melt the ULDPE rubber polymer externally coated with a VTMOS/DHBP mixture (here: ethylen-octene copolymer) which has been gravimetrically metered into inlet 12 of extruder 10 (co-kneader).

Due to the temperature profile mentioned above, decomposition of the peroxide (DBP) starts and hydrogen atoms are abstracted from the polymeric chains of the ULDPE rubber polymer (a) creating radical sites on these chains. These radical sites react with the double bond of the vinyl groups of the organosilane (VTMOS) resulting in a silane grafted rubber polymer (a').

Within the functional zone ① peroxide decomposition and silane grafting are completed. The residual time of the rubber polymer in this zone ① is preferably approximately 10 times the half life time of the peroxide used.

The crystalline polypropylene block copolymer admixed with thermo and/or stabilizing agents is gravimetrically metered into co-kneader 10 at inlet 14 by means of a side-stream feeder. In the following functional zone ② the crystalline polypropylene block polymer (B) is melted and physically blended with the silane grafted ULDPE matrix component (a').

This blend ist transferred to an inlet 22 of a twin screw extruder 20 by means of a gear pump (not shown).

The extender oil (C), preferably paraffinic-white oil, is added to the blend at inlet 24 of twin screw extruder 20. The position of inlet 24 along the length of extruder 20 should be selected such that addition of extender oil (C) does not affect the silane grafting reaction. Homogenous extender incorporation takes place in functional zone ③.

Finally, a cross-linking agent will be metered into twin screw extruder 20 at inlet 26 or 28, the cross-linking agent comprising a catalyst (e.g. dibutyltin dilaurate), a buffer solution and a mixture of ethanediol and water.

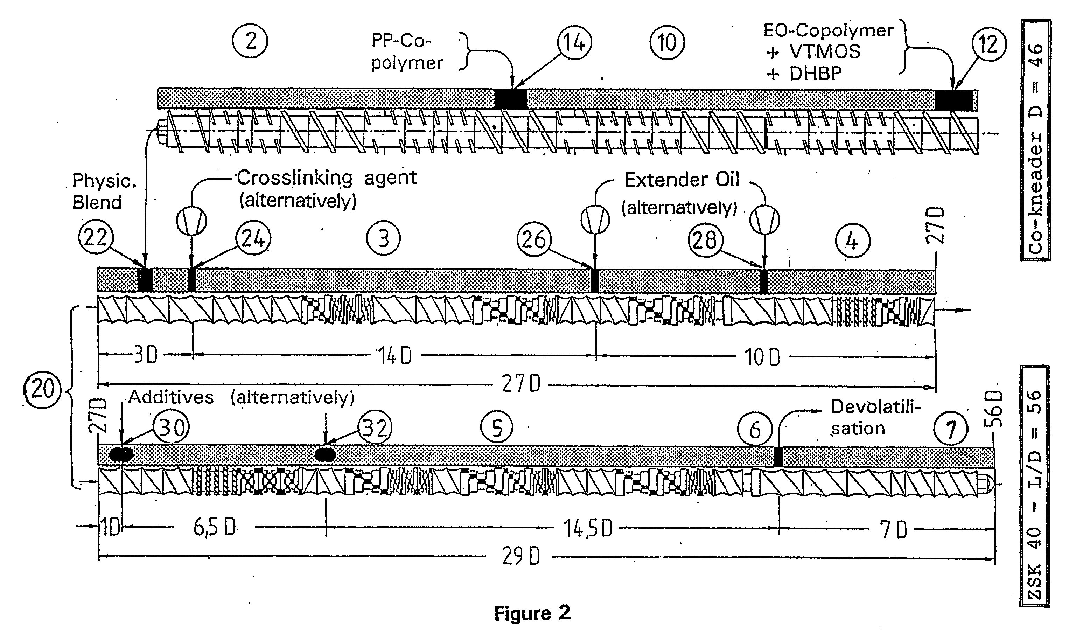

A still improved concept shown in Figure 2 is similar to that shown in Figure 1, but differs with respect to functional zones ③ and ④. In Figure 2 the cross-linking mixture is added at inlet 24 and inlets 26;and 28 may alternatively be used to feed extender oil (C) into the extruder.

The following functional zones ⑤, ⑥ and ⑦ are the same in Figure 1 and 2 so that the following description applies to both Figures.

It is important that the hydrolysis and condensation reaction is carried out under the effect of high shear forces and deformation rates in order to ensure a finely dispersed ULDPE rubber phase in the polypropylene matrix. To this end, functional zones ④ and ⑤ comprise kneading blocks and distributive mixing elements. At the same time, this machine concept allows a homogenous uptake and distribution of additives, including master batch, nucleation agent, processing aids and the like added at inlet 30 or 32.

When passing functional zones ⑥ and ⑦, products resulting from the peroxide decomposition, ethanediol as well as excess water are extracted and pressure for forming strands is built up in functional zone ⑦.

Soft thermoplastic elastomer compositions containing high proportions of ULDPE rubber and extender oil are shown in Table 8. The two step process was adopted to prepare those compositions by using the same processing conditions as described in connection with Fig. 1 and using usual prior art cross-linking agent except that composition 20 was prepared by using the inventive cross-linking agent. The extender oil was added after the silane grafting reaction. The data shown in Table 8 indicate that the composition 20 has excellent stress-strain properties, better compression set and tension set than all other compositions because of use of the inventive cross-linking agent and further improved the mechanical properties and elasticity.

The advantageous effect of the use of the inventive buffer-solution in the cross-linking step can be shown by the following test:

The strands exiting the extender aggregate while still warm are compressed to plate-shaped bodies of a thickness of 2.0 mm and subsequently rapidly cooled.

From these plates, circular test specimens having a diameter of 25 mm are cut and carefully measured with a so-called mechanical spectrometer (RMS 800, Rheometrics).

The test specimens were then oscillation tested using a time sweep, a constant frequency ω (e.g. ω = 1 rad/s) and a constant shear rate amplitude γₒ (e.g. γₒ = 1 to 5 %).

During this test, the following parameters were measured during a testing time period tᵥ = 1 800 or 2 700 s:
- complex viscosity η* = η*(t)
- storage modulus G' = G'(t)
- loss modulus G" = G"(t)

Typically, an increase of the values of the paramters η* and G' during the testing time period is observed when the cross-linking reaction was not completed in the extruder aggregate. The increase observed for η* and G' depends on the cross-linking degree of component (A) which has been reached until exiting of the material from the compounding aggregate.

For the inventive compositions, essentially no increase of the parameters η* and G' are found during the testing period. If a small decrease for these parameters is found, this indicates a degradation process occurring in the PP-matrix as a result of too long testing time.

**Table 8**

| Compositions | 17 | 18 | 19 | 20 |
|---|---|---|---|---|
| ULDPE Rubber D¹ | 60 | 60 | 65 | 65 |
| Vinyltrimethoxysilane | 3.5 | → | → | → |
| 2,5-dimethyl-2,5-di (t-butylperoxy)hexane | 0.10 | → | → | → |
| Polypropylene PP-2² | 40 | 40 | | |
| Polypropylene PP-5² | | | 35 | 35 |
| Extender Oil³ | 40 | 80 | 60 | 80 |
| Stabilizer⁴ | 0.3 | 0.3 | 0.3 | 0.3 |
| Cross-linking Agent | 2 | 2 | 2 | 2 |
| Hardness, Shore A | 85 | 75 | 78 | 70 |
| 100% Modulus, Mpa | 7.7 | 5.3 | 7.1 | 5.2 |
| Tensile Strength, Mpa | 14.0 | 10.1 | 11.2 | 8.7 |
| Elongation at Break, % | 447 | 421 | 308 | 309 |
| Tension Set, % | 22 | 17 | 18 | 14 |
| Compression Set, % at 70 °C/22 h | 50 | 40 | 36 | 31 |
| ASTM #3 Oil Swell, % at 70 °C/22 h | 78.2 | 71 | 77 | 75 |
| Complex Viscosity, η∗ x 10³ Pa.s, at ω=1 rad/s, 230 °C | 30.28 | 24.83 | 66.93 | 59.54 |
| MFI at 230 °C/10 kg | 8.1 | 30 | 35⁵ | 3.1 |

| | | | | |
|---|---|---|---|---|
| ¹ ULDPE rubber D is Engage polyolefin shown in Table 1 | | | | |
| ² Shown in Table 5 | | | | |
| ^{3,4} Same as Table 3 | | | | |
| ⁵ MFI at 230 °C/2.16 kg | | | | |

Proportions are same as in Table 3.

All proportions in all of the Tables are in parts by weight if not indicated otherwise.

## Claims

1. A thermoplastic composition comprising
(A) about 30 to 80 parts by weight of an ultra low-density polyethylene rubber (ULDPE rubber) vulcanizate in the form of particles dispersed in a matrix;
(B) about 70 to 20 parts by weight of a crystalline thermoplastic polyolefin serving as a matrix forming component; and
(C) an extender oil in an amount of 40 to 120 parts by weight per 100 parts by weight of the ULDPE rubber vulcanization component (A);
said ULDPE rubber vulcanizate component (A) being produced by subjecting an ULDPE rubber polymer (a) to a curing reaction, wherein
in a first step an organosilane is grafted onto the ULDPE rubber polymer (a) and in a subsequent second step the grafted ULDPE rubber polymer (a') is dynamically vulcanized in the presence of a cross-linking agent comprising a catalyst
**characterized in that**
the cross-linking agent comprises an aqueous buffer solution having a pH in the range of from 8 to 15.

2. Thermoplastic composition according to claim 1, wherein the pH of the buffer solution is in the range of from 9 to 12.

3. Thermoplastic composition according to claim 1 or 2, wherein said thermoplastic polyolefin (B) is selected among polyolefin polymers compatible with said ULDPE rubber vulcanizate component (A) and said extender oil (C).

4. Thermoplastic composition according to claim 3, wherein said thermoplastic polyolefin (B) comprises a block or random ethylene or α-olefin polypropylene copolymer of 5 to 15 % by weight.

5. Thermoplastic composition according to claim 4, wherein said polypropylene copolymer has a degree of cristallinity α_{K} of 35% or more.

6. Thermoplastic composition according to anyone of the preceding claims, wherein the composition includes up to 1.5% by weight of the composition of one or more processing aids.

7. Thermoplastic composition according to anyone of the preceding claims, wherein the composition comprises a fluorocarbon polymer in the range of 0.005 to 0.5 parts by weight phr.

8. Thermoplastic composition according to anyone of the preceding claims, wherein the cross-linking density of the rubber vulcanizate (A) is in the range of 10 to 40 * 10⁻⁵ moles/ml.

9. Thermoplastic composition according to anyone of the preceding claims, wherein the cross-linking agent comprises in addition to the catalyst and the aqueous buffer solution a polyhydric alcohol and/or an emulsifier.

10. Thermoplastic composition according to claim 8, wherein the polyhydric alcohol is ethanediol or ethylene glycol.

11. Thermoplastic composition according to anyone of the preceding claims, wherein the catalyst is an organotin compound, preferably a dialkyltin dicarboxylate, most preferred dibutyltindilaurate.

12. Thermoplastic composition according to claim 11, wherein the amount of organotin compound is 0.5 to 5 parts by weight per 100 parts by weight of the buffer solution.

13. Thermoplastic composition according to claim 11 or 12, wherein the amount of emulsifier is in the range of from 0.1 to 0.5 parts by weight per 100 parts by weight of organotin compound.

14. Thermoplastic composition according to anyone of claims 9 to 13, wherein the emulsifier is a surfactant.

15. Thermoplastic composition according to claim 14, wherein said surfactant forms a colloidal suspension with the catalyst.

16. Thermoplastic composition according to anyone of the preceding claims, wherein the buffer solution comprises phosphates, borates, carbonates, bicarbonates, ammonia, sodium hydroxide and/or potassium hydroxide.

17. Thermoplastic composition according to anyone of the preceding claims, wherein the ULDPE rubber polymer (a) is a copolymer of ethylene and a comonomer selected from butene, hexene and octen.

18. Thermoplastic composition according to claim 17, wherein the ULDPE rubber polymer (a) contains 20 to 35 % by weight of the comonomer.

19. Thermoplastic composition according to claim 17 or 18, wherein the ULDPE rubber polymer (a) has a density in the range of from 0.855 to 0.900 g/cm³.

20. Thermoplastic composition according to any one of claims 17 to 19, wherein the molecular weight distribution M_{w}/Mₙ of the ULDPE rubber polymer (a) is in the range of 1.8 ≤ M_{W}/M_{N} ≤ 2.5 and the melt flow index (190 °C/2.16 kg) smaller than 10.

21. Thermoplastic composition according to anyone of the preceding claims, wherein the extender oil (C) is present in the composition in an amount of from 10 to 150 parts by weight, preferably 20 to 120 parts per 100 parts by weight of compound (A).

22. Thermoplastic composition according to claim 21, wherein the extender oil comprises paraffinic oil and/or ester of aliphatic monocarboxylic acids.

23. Thermoplastic composition according to anyone of the preceding claims, wherein a lightstabilizer of the Tinuvin type is comprised in the composition.

24. Process for producing a thermoplastic composition comprising
(A) about 30 to 80 parts by weight of an ultra low-density polyethylene rubber (ULDPE rubber) vulcanizate in the form of particles dispersed in a matrix;
(B) about 70 to 20 parts by weight of a crystalline thermoplastic polyolefin serving as a matrix forming component; and
(C) an extender oil in an amount of 40 to 120 parts by weight per 100 parts by weight of the ULDPE rubber vulcanizate component (A);
**characterized in that**
for forming the rubber component (A) in a first step a ULDPE rubber polymer is grafted with an organosilane and in a subsequent second step the grafted ULDPE polymer is dynamically vulcanized in the presence of a crosslinking agent comprising a catalyst and an aqueous buffer solution having a pH in the range of from 8 to 15.

25. Process according to claim 24, wherein the process is carried out as a single-step process.

26. Process according to claim 24 or 25, wherein the pH of the buffer solution is in the range of from 9 to 12.

27. Process according to anyone of claims 24 to 26, wherein dynamic vulcanization is performed in a co-rotating twin screw extruder.

28. Process according to anyone of claims 24 to 27, wherein the extender oil is incorporated into the composition subsequently to the silane grafting step.

29. Process according to claim 28, wherein the extender oil is incorporated into the composition after the addition of the cross-linking agent.

30. Process according to anyone of claims 24 to 29, wherein the grafting step is performed in the presence of a peroxide, preferably 2,5-dimethly 2,5-bis(t-butylperoxy)hexane (DHBP) or dicumylperoxide (DCUP).

31. Process according to claim 30, wherein the organosilane to be grafted onto the ULDPE rubber polymer (a) contains a vinyl group and a hydrolyzable alkoxy group, the organosilane being preferably selected from vinyltrimethoxysilane (VTMOS), vinyltriethoxysilane (VTEOS) or MEMO silanes.

32. Process according to anyone of the claims 24 to 31, wherein in the silane grafting step 2 to 6 parts by weight of an organosilane and 0.05 to 0.40 parts by weight of a peroxide are used, based on 100 parts by weight of the ULDPE rubber polymer (a).

33. Process according to anyone of claims 24 to 32, wherein the vulcanizing step is performed to the extent that the gel content of the rubber vulcanizate (A) is more than 95 % by weight.

## Patentansprüche

1. Thermoplastische Zusammensetzung, umfassend
(A) ungefähr 30 bis 80 Gewichtsteile eines Polyethylen-Gummivulkanisates mit extrem geringer Dichte (ULDPE-Gummi) in Form von in einer Matrix dispergierten Partikeln;
(B) ungefähr 70 bis 20 Gewichtsteile eines kristallinen thermoplastischen Polyolefines, das als matrixbildende Komponente dient; und
(C) ein Extenderöl in einer Menge von 40 bis 120 Gewichtsteilen pro 100 Gewichtsteile der ULDPE-Gummi-Vulkanisatkomponente (A);
wobei die ULDPE-Gummi-Vulkanisatkomponente (A) hergestellt wird, indem ein ULDPE-Gummipolymer (a) einer Vernetzungsreaktion unterworfen wird, wobei
in einem ersten Schritt ein Organosilan auf das ULDPE-Gummipolymer (a) aufgepfropft wird und in einem nachfolgenden zweiten Schritt das gepfropfte ULDPE-Gummipolymer (a') in der Gegenwart eines einen Katalysator umfassenden Vernetzungsmittels dynamisch vulkanisiert wird,
**dadurch gekennzeichnet,**
**dass** das Vernetzungsmittels eine wässrige Pufferlösung umfasst, die einen pH-Wert im Bereich von 8 bis 15 aufweist.

2. Thermoplastische Zusammensetzung nach Anspruch 1, wobei der pH-Wert der Pufferlösung im Bereich von 9 bis 12 liegt.

3. Thermoplastische Zusammensetzung nach Anspruch 1 oder 2, wobei das thermoplastische Polyolefin (B) aus Polyolefinpolymeren ausgewählt ist, die mit der ULDPE-Gummi-Vulkanisatkomponente (A) und dem Extenderöl (C) verträglich sind.

4. Thermoplastische Zusammensetzung nach Anspruch 3, wobei das thermoplastische Polyolefin (B) ein Block- oder Random- ethylen- oder -α-olefinpolypropylen-Copolymer mit 5 bis 15 Gew.% umfasst.

5. Thermoplastische Zusammensetzung nach Anspruch 4, wobei das Polypropylencopolymer einen Kristallisationsgrad von α_{K} von 35 % oder mehr aufweist.

6. Thermoplastische Zusammensetzung nach einem der voranstehenden Ansprüche, wobei die Zusammensetzung ein oder mehrere Verarbeitungshilfsmittel von bis zu 1,5 Gew.% der Zusammensetzung umfasst.

7. Thermoplastische Zusammensetzung nach einem der voranstehenden Ansprüche, wobei die Zusammensetzung ein Fluorkohlenwasserstoffpolymer im Bereich von 0,005 bis 0,5 Gewichtsteile pro 100 Teile Gummi umfasst.

8. Thermoplastische Zusammensetzung nach einem der voranstehenden Ansprüche, wobei die Vernetzungsdichte des Gummivulkanisats (A) im Bereich von 10 bis 40 * 10⁻⁵ Mol/ml liegt.

9. Thermoplastische Zusammensetzung nach einem der voranstehenden Ansprüche, wobei das Vernetzungsmiittel zusätzlich zu dem Katalysator und der wässrigen Pufferlösung einen mehrwertigen Alkohol und/oder einen Emulgator umfasst.

10. Thermoplastische Zusammensetzung nach Anspruch 8, wobei der mehrwertige Alkohol ein Ethandiol oder ein Ethylenglycol ist.

11. Thermoplastische Zusammensetzung nach einem der voranstehenden Ansprüche, wobei der Katalysator eine Organozinnverbindung, vorzugsweise ein Dialkylzinndicarboxylat und am meisten bevorzugt ein Dibutylzinndilaurat, ist.

12. Thermoplastische Zusammensetzung nach Anspruch 11, wobei der Anteil der Organozinnverbindung 0,5 bis 5 Gewichtsteile pro 100 Gewichtsteile der Pufferlösung beträgt.

13. Thermoplastische Zusammensetzung nach Anspruch 11 oder 12, wobei der Anteil des Emulgators im Bereich von 0,1 bis 0,5 Gewichtsteile pro 100 Gewichtsanteile der Organozinnverbindung liegt.

14. Thermoplastische Zusammensetzung nach einem der Ansprüche 9 bis 13, wobei der Emulgator ein grenzflächenaktives Mittel ist.

15. Thermoplastische Zusammensetzung nach Anspruch 14, wobei das grenzflächenaktive Mittel eine kolloidale Suspension mit dem Katalysator bildet.

16. Thermoplastische Zusammensetzung nach einem der voranstehenden Ansprüche, wobei die Pufferlösung Phosphate, Borate, Carbonate, Bicarbonate, Ammoniak, Natriumhydroxid und/oder Kaliumhydroxid umfasst.

17. Thermoplastische Zusammensetzung nach einem der voranstehenden Ansprüche, wobei das ULDPE-Gummipolymer (a) ein Copolymer des Ethylens und eines aus Buten, Hexen und Okten ausgewählten Comonomers ist.

18. Thermoplastische Zusammensetzung nach Anspruch 17, wobei das ULDPE-Gummipolymer (a) 20 bis 35 Gew.% des Comonomers enthält.

19. Thermoplastische Zusammensetzung nach Anspruch 17 oder 18, wobei das ULDPE-Gummipolymer (a) eine Dichte im Bereich von 0,855 bis 0,900 g/cm³ aufweist.

20. Thermoplastische Zusammensetzung nach einem der Ansprüche 17 bis 19, wobei die Molekulargewichtsverteilung M_{W}/Mₙ des ULDPE-Gummipolymers (a) im Bereich von 1,8 ≤ M_{W}/Mₙ ≤ 2,5 liegt und der Schmelzflussindex (190 °C / 2,16 kg) kleiner als 10 ist.

21. Thermoplastische Zusammensetzung nach einem der voranstehenden Ansprüche, wobei das Extenderöl (C) in der Zusammensetzung in einer Menge von 10 bis 150 Gewichtsteilen, vorzugsweise 20 bis 120 Anteile pro 100 Gewichtsteile der Verbindung (A), vorhanden ist.

22. Thermoplastische Zusammensetzung nach Anspruch 21, wobei das Extenderöl ein Paraffinöl und/oder -ester aliphatischer Monocarboxylsäuren umfasst.

23. Thermoplastische Zusammensetzung nach einem der voranstehenden Ansprüche, wobei in der Zusammensetzung ein Lichtschutzmittel vom Tinuvin-Typ vorhanden ist.

24. Verfahren zur Herstellung einer thermoplastischen Zusammensetzung, umfassend
(A) ungefähr 30 bis 80 Gewichtsteile eines Polyethylen-Gummivulkanisats mit extrem geringer Dichte (ULDPE-Gummi) in Form von dispergierten Partikeln in einer Matrix;
(B) ungefähr 70 bis 20 Gewichtsteile eines kristallinen thermoplastischen Polyolefins, das als matrixbildende Komponente dient; und
(C) ein Extenderöl in einer Menge von 40 bis 120 Gewichtsteilen pro 100 Gewichtsanteile der ULDPE-Gummi-Vulkanisatkomponente (A);
**dadurch gekennzeichnet, dass**
zur Bildung der Gummikomponente (A) in einem ersten Schritt ein ULDPE-Gummipolymer mit einem Organosilan gepfropft wird und in einem nachfolgenden zweiten Schritt das gepfropfte ULDPE-Polymer in Gegenwart eines Vernetzungsmittel, das einen Katalysator und eine wässrige Pufferlösung mit einem pH-Wert im Bereich von 8 bis 15 umfasst, dynamisch vulkanisiert wird.

25. Verfahren nach Anspruch 24, wobei das Verfahren als Einstufenprozess durchgeführt wird.

26. Verfahren nach Anspruch 24 oder 25, wobei der pH-Wert der Pufferlösung im Bereich von 9 bis 12 liegt.

27. Verfahren nach einem der Ansprüche 24 bis 26, wobei die dynamische Vulkanisierung in einem gleichsinnig drehenden Doppelschneckenextruder durchgeführt wird.

28. Verfahren nach einem der Ansprüche 24 bis 27, wobei das Extenderöl in die Zusammensetzung nach dem Silan-Pfropfschritt eingebracht wird.

29. Verfahren nach Anspruch 28, wobei das Extenderöl in die Zusammensetzung nach der Zugabe des Vernetzungsmittel eingebracht wird.

30. Verfahren nach einem der Ansprüche 24 bis 29, wobei der Pfropfschritt in Gegenwart eines Peroxids, vorzugsweise 2,5-Dimethyl-2,5-bis(tbutylperoxy)hexan (DHBP) oder Dicumylperoxid (DCUP), durchgeführt wird.

31. Verfahren nach Anspruch 30, wobei das auf das ULDPE-Gummipolymer (a) aufzupfropfende Organosilan eine Vinylgruppe und eine hydrolysierbare Alkoxygruppe enthält, wobei das Organosilan vorzugsweise aus Vinyltrimethoxysilan (VTMOS), Vinyltriethoxysilan (VTEOS) oder MEMO-Silanen ausgewählt ist.

32. Verfahren nach einem der Ansprüche 24 bis 31, wobei in dem Silan-Pfropfschritt 2 bis 6 Gewichtsanteile eines Organosilans und 0,05 bis 0,40 Gewichtsteile eines Peroxids verwendet werden, bezogen auf 100 Gewichtsteile des ULDPE-Gummipolymers (a).

33. Verfahren nach einem der Ansprüche 24 bis 32, wobei der Vulkanisierungsschritt in dem Ausmaß durchgeführt wird, dass der Gelgehalt des Gummivulkanisats (A) größer ist als 95 Gew.%.

## Revendications

1. Composition thermoplastique comprenant
(A) d'environ 30 à 80 parties en poids d'un produit de vulcanisation d'un caoutchouc de polyéthylène ultra basse densité (caoutchouc d'ULDPE) sous forme de particules dispersées dans une matrice ;
(B) d'environ 70 à 20 parties en poids d'une polyoléfine thermoplastique cristalline servant de composant formant une matrice ; et
(C) une huile diluante à raison de 40 à 120 parties en poids pour 100 parties en poids du composant de vulcanisation d'un caoutchouc d'ULDPE (A) ;
ledit composant de vulcanisation d'un caoutchouc d'ULDPE (A) étant produit par le fait de soumettre un polymère de caoutchouc d'ULDPE (a) à une réaction de durcissement, dans laquelle
dans une première étape, un organosilane est greffé sur le polymère de caoutchouc d'ULDPE (a) et, dans une deuxième étape ultérieure, le polymère de caoutchouc d'ULDPE greffé (a') est dynamiquement vulcanisé en présence d'un agent de réticulation comprenant un catalyseur
**caractérisée en ce que**
l'agent de réticulation comprend une solution aqueuse tampon ayant un pH dans la plage de 8 à 15.

2. Composition thermoplastique selon la revendication 1, dans laquelle le pH de la solution tampon est dans la plage de 9 à 12.

3. Composition thermoplastique selon la revendication 1 ou 2, dans laquelle ladite polyoléfine thermoplastique (B) est choisie parmi des polymères de polyoléfine compatibles avec ledit composant de vulcanisation d'un caoutchouc d'ULDPE (A) et avec ladite huile diluante (C).

4. Composition thermoplastique selon la revendication 3, dans laquelle ladite polyoléfine thermoplastique (B) comprend un copolymère séquencé ou statistique d'éthylène ou d'une α-oléfine-polypropylène à raison de 5 à 15 % en poids.

5. Composition thermoplastique selon la revendication 4, dans laquelle ledit copolymère de polypropylène a un degré de cristallinité αₖ de 35 % ou plus.

6. Composition thermoplastique selon l'une quelconque des revendications précédentes, dans laquelle la composition comprend jusqu'à 1,5 % en poids de la composition d'un ou de plusieurs auxiliaires de mise en oeuvre.

7. Composition thermoplastique selon l'une quelconque des revendications précédentes, dans laquelle la composition comprend un polymère fluorocarboné à raison de 0,005 à 0,5 parties en poids phr.

8. Composition thermoplastique selon l'une quelconque des revendications précédentes, dans laquelle la densité de réticulation du produit de vulcanisation du caoutchouc (A) est dans la plage de 10 à 40 x 10⁻⁵ moles/ml.

9. Composition thermoplastique selon l'une quelconque des revendications précédentes, dans laquelle l'agent de réticulation comprend, en plus du catalyseur et de la solution aqueuse tampon, un polyol et/ou un émulsifiant.

10. Composition thermoplastique selon la revendication 8, dans laquelle le polyol est l'éthanediol ou l'éthylèneglycol.

11. Composition thermoplastique selon l'une quelconque des revendications précédentes, dans laquelle le catalyseur est un composé d'organoétain, de préférence un dicarboxylate de dialkylétain, tout particulièrement le dilaurate de dibutylétain.

12. Composition thermoplastique selon la revendication 11, dans laquelle la quantité de composé d' organoétain est de 0,5 à 5 parties en poids, pour 100 parties en poids de la solution tampon.

13. Composition thermoplastique selon la revendication 11 ou 12, dans laquelle la quantité d'émulsifiant est dans la plage de 0,1 à 0,5 parties en poids, pour 100 parties en poids du composé d'organoétain.

14. Composition thermoplastique selon l'une quelconque des revendications 9 à 13, dans laquelle l'émulsifiant est un tensioactif.

15. Composition thermoplastique selon la revendication 14, dans laquelle ledit tensioactif forme une suspension colloïdale avec le catalyseur.

16. Composition thermoplastique selon l'une quelconque des revendications précédentes, dans laquelle la solution tampon comprend des phosphates, des borates, des carbonates, des bicarbonates, de l'ammoniac, de l'hydroxyde de sodium et/ou de l'hydroxyde de potassium.

17. Composition thermoplastique selon l'une quelconque des revendications précédentes, dans laquelle le polymère de caoutchouc d'ULDPE (a) est un copolymère d'éthylène et d'un comonomère choisi parmi le butène, l'hexène et l'octène.

18. Composition thermoplastique selon la revendication 17, dans laquelle le polymère de caoutchouc d'ULDPE (a) contient 20 à 35 % en poids du comonomère.

19. Composition thermoplastique selon la revendication 17 ou 18, dans laquelle le polymère de caoutchouc d'ULDPE (a) a une masse volumique dans la plage de 0,855 à 0,900 g/cm³.

20. Composition thermoplastique selon l'une quelconque des revendications 17 à 19, dans laquelle la distribution de masses moléculaires M_{W}/Mₙ du polymère de caoutchouc d'ULDPE (a) est dans la plage de 1,8 ≤ M_{w}/Mₙ ≤ 2,5 et l'indice d'écoulement en fusion (190°C/2,16 kg) est inférieur à 10.

21. Composition thermoplastique selon l'une quelconque des revendications précédentes, dans laquelle l'huile diluante (C) est présente dans la composition en une quantité de 10 à 150 parties en poids, de préférence de 20 à 120 parties en poids, pour 100 parties en poids du composé (A).

22. Composition thermoplastique selon la revendication 21, dans laquelle l'huile diluante comprend une huile paraffinique et/ou un ester d'acides monocarboxyliques aliphatiques.

23. Composition thermoplastique selon l'une quelconque des revendications précédentes, dans laquelle un stabilisant à la lumière du type Tinuvin est incorporé dans la composition.

24. Procédé de production d'une composition thermoplastique comprenant
(A) d'environ 30 à 80 parties en poids d'un produit de vulcanisation d'un caoutchouc de polyéthylène ultra basse densité (caoutchouc d'ULDPE) sous forme de particules dispersées dans une matrice ;
(B) d'environ 70 à 20 parties en poids d'une polyoléfine thermoplastique cristalline servant de composant formant une matrice ; et
(C) une huile diluante à raison de 40 à 120 parties en poids pour 100 parties en poids du composant de vulcanisation d'un caoutchouc d'ULDPE (A) ;
**caractérisé en ce que**
pour la formation du composant de caoutchouc (A), dans une première étape, un polymère de caoutchouc d'ULDPE est greffé à un organosilane et, dans une deuxième étape ultérieure, le polymère de caoutchouc d'ULDPE greffé est dynamiquement vulcanisé en présence d'un agent de réticulation comprenant un catalyseur et une solution aqueuse tampon ayant un pH dans la plage de 8 à 15.

25. Procédé selon la revendication 24, dans lequel le procédé est réalisé sous forme d'un procédé en une seule étape.

26. Procédé selon la revendication 24 ou 25, dans lequel le pH de la solution tampon est dans la plage de 9 à 12 .

27. Procédé selon l'une quelconque des revendications 24 à 26, dans lequel la vulcanisation dynamique est réalisée dans une extrudeuse à deux vis corotative.

28. Procédé selon l'une quelconque des revendications 24 à 27, dans lequel l'huile diluante est incorporée dans la composition après l'étape de greffage du silane.

29. Procédé selon la revendication 28, dans lequel l'huile diluante est incorporée dans la composition après l'addition de l'agent de réticulation.

30. Procédé selon l'une quelconque des revendications 24 à 29, dans lequel l'étape de greffage est réalisée en présence d'un peroxyde, de préférence le 2,5-diméthyl-2,5-bis(t-butylperoxy)hexane (DHBP) ou le peroxyde de dicumyle (DCUP).

31. Procédé selon la revendication 30, dans lequel l'organosilane à greffer sur le polymère de caoutchouc d'ULDPE (a) contient un groupe vinyle et un groupe alcoxy hydrolysable, l'organosilane étant de préférence choisi parmi le vinyltriméthoxysilane (VTMOS), le vinyltriéthoxysilane (VTEOS) ou les silanes MEMO.

32. Procédé selon l'une quelconque des revendications 24 à 31, dans lequel dans l'étape de greffage d'un silane, 2 à 6 parties en poids d'un organosilane et de 0,05 à 0,40 parties en poids d'un peroxyde sont utilisées, pour 100 parties en poids du polymère de caoutchouc d'ULDPE (a).

33. Procédé selon l'une quelconque des revendications 24 à 32, dans lequel l'étape de vulcanisation est réalisée jusqu'à un point où la teneur en gel du produit de vulcanisation du caoutchouc (A) est supérieure à 95 % en poids.
